Europäisches Patentamt

European Patent Office

Office européen des brevets

(11) Veröffentlichungsnummer: **0 099 559**
A2

# (12) EUROPÄISCHE PATENTANMELDUNG

(21) Anmeldenummer: 83106982.8

(22) Anmeldetag: 16.07.83

(51) Int. Cl.³: **F 16 F 9/00**
B 26 D 7/22

(30) Priorität: 21.07.82 DE 3227210

(43) Veröffentlichungstag der Anmeldung:
01.02.84 Patentblatt 84/5

(84) Benannte Vertragsstaaten:
AT BE CH FR GB IT LI NL SE

(71) Anmelder: Knäbel, Horst
Friedenstrasse 10a
D-4005 Meerbusch 1(DE)

(72) Erfinder: Knäbel, Horst
Friedenstrasse 10a
D-4005 Meerbusch 1(DE)

(74) Vertreter: Kossobutzki, Walter
Waldstrasse 6
D-5419 Helferskirchen(DE)

(54) **Hydraulische Verzögerungsvorrichtung.**

(57) Bei einer Vorrichtung (1) zur hydraulischen Verzögerung der Bewegung zwischen zwei relativ gegeneinander bewegbaren Bauteilen (4,6), insbesondere zwischen einem Kolben (6) und einem Gehäuse (4), ist der Raum zwischen den beiden Bauteilen (4,6) vollständig mit einer Flüssigkeit gefüllt.

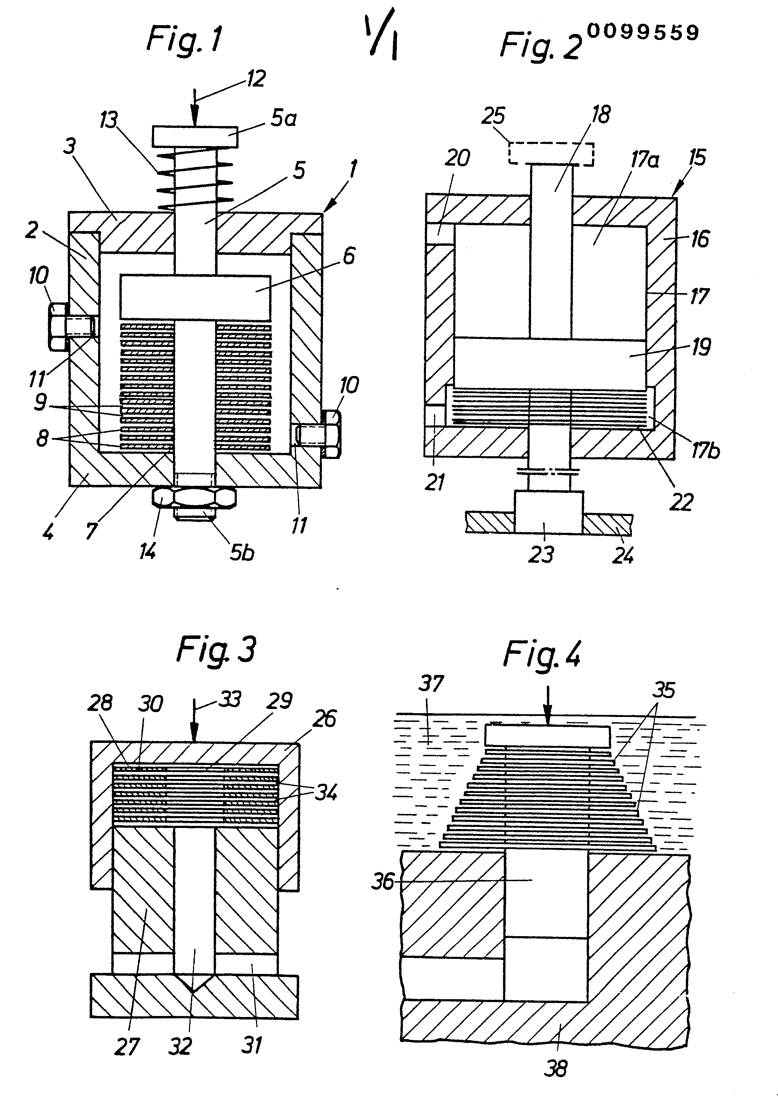

Um den Herstellungsaufwand zu verringern, eine sanfte Dämpfung sicherzustellen, eine geringe Baulänge zu erzielen und die Schmutzanfälligkeit zu beseitigen, ist zwischen den beiden Bauteilen (4,6) mindestens eine dünne, von einer geringen Rückstellkraft beaufschlagbare Scheibe (8) zur Bildung mindestens zweier mit der Flüssigkeit gefüllter, offener Spalte (9) angeordnet, und die beiden Bauteile (4,6) sind unter Überwindung der Rückstellkraft der Scheibe (8) und Verdrängung der Flüssigkeit aus den Spalten (9) relativ gegen die Scheibe (8) bewegbar (Fig. 1).

Fig. 1

152

Ing.(grad.) Horst Knäbel, Friedenstr. 10a, 4005 Meerbusch 1


## Hydraulische Verzögerungsvorrichtung

Die Erfindung bezieht sich auf eine Vorrichtung zur hydraulischen Verzögerung der Bewegung zwischen zwei relativ gegeneinander bewegbaren Bauteilen gemäß dem Oberbegriff des Anspruches 1.

Zur hydraulischen Verzögerung eines in einem Zylinderraum eines Gehäuses hin- und herbewegbaren Kolbens vor Erreichung einer seiner Endlagen ist es bekannt, dem Kolben oder der in aufnehmenden Kolbenstange einen zylindrischen Bund vorzuordnen, der in eine entsprechende zylindrische Ausnehmung des Gehäuses eintaucht. Diese Ausnehmung ist, wie das gesamte Gehäuse, mit Flüssigkeit, beispielsweise Hydrauliköl, gefüllt. Beim Eintauchen des Bundes in die Ausnehmung muß nun die Flüssigkeit verdrängt werden, was über eine mit einer meist einstellbaren Drossel ausgerüsteten Abflußleitung erfolgt. Über die Länge des zylindrischen Bundes läßt sich nun der Verzögerungsweg bestimmen, während der Durchmesser des Bundes und die Einstellung der Drossel die Verzögerung beeinflussen. Eine derartige Anordnung erfordert eine verhältnismäßig große Baulänge, ist aufwendig in der Bearbeitung und schmutzanfällig.

Um an Schneidpressen das beim Schnittschlag, also im Augenblick des Materialdurchbruchs, auftretende Geräusch zu reduzieren, ist es bekannt, hydraulische Dämpfungszylinder vorzusehen, die verhindern, daß die nach dem Schnittbruch freiwerdenden Federkräfte, die infolge einer Nachgiebigkeit der Presse, des Werkzeuges und des Werkstückes durch eine Vorspannung beim Schneidvorgang entstehen, nicht schlagartig frei werden. Dazu weisen die mit einer Flüssigkeit gefüllten

Dämpfungszylinder eine mit einer Drossel versehene Ablaßleitung auf. Auch diese Dämpfungszylinder erfordern eine aufwendige Bearbeitung und sind schmutzanfällig. Ferner erzeugen die vorbeschriebenen Dämpfungs- bzw. Verzögerungseinrichtungen aufgrund des einmal eingestellten Drosselquerschnittes über den Dämpfungsweg eine Verzögerungskraft, die sich proportional zum Quadrat der Relativgeschwindigkeit einstellt und somit dem Prinzip einer Dämpfung widerspricht.

Es sind ferner Stoßdämpfer bekannt, die diese Abhängigkeit umgehen und bei denen der Kolben in Dämpfungsrichtung von einem Regulierrohr mit Regulierschlitzen begrenzt ist, über die die im Hubraum befindliche Dämpfungsflüssigkeit in eine Kammer abströmen kann. Je nach Querschnitt, Anzahl und Abstand der Regulierschlitze verringert sich bei dem Hineinfahren des Kolbens in das Regulierrohr der Abflußquerschnitt. Da sich bei dieser Kolbenbewegung die Kolbengeschwindigkeit verringert, läßt sich durch die Regulierschlitze der Staudruck und damit die Verzögerung des Kolbens konstant halten. Auch diese Ausbildung erfordert eine aufwendige Bearbeitung und ist ebenfalls schmutzempfindlich.

Der Erfindung liegt die Aufgabe zugrunde, eine Vorrichtung zur hydraulischen Verzögerung der Bewegung zwischen zwei relativ gegeneinander bewegbaren Bauteilen zu schaffen, die mit geringstem Aufwand herstellbar ist, eine sanfte Dämpfung gewährleistet, eine geringe Baulänge erfordert und nicht schmutzanfällig ist. Darüberhinaus soll erreicht werden, daß die Intensität der Verzögerung den jeweiligen Bedürfnissen in einfacher Weise angepaßt und auch nachträglich ohne besonderen Aufwand verändert werden kann.

Zur Lösung dieser Aufgabe ist die Vorrichtung gemäß dem Kennzeichen des Anspruches 1 ausgebildet. Die Scheiben lassen sich preiswert aus Blech oder aus Kunststoff ausstanzen und ergeben eine kurze Baulänge der Vorrichtung. Schmutz in der Flüssigkeit wirkt sich nicht nachteilig auf die Funktion der Vorrichtung aus, da keine engen und bearbeiteten Strömungsquerschnitte vorhanden sind und Schmutz gegebenenfalls ohne Schwierigkeiten ausgespült werden kann. Eine Umwälzung der Flüssigkeit in andere Räume ist nicht erforderlich. Durch entsprechende Wahl der Wandstärke und/oder Grundfläche sowie Anzahl der Scheiben und der damit verbundenen Anzahl der Spalte läßt sich die Intensität der Verzögerung und die Länge des Verzögerungsweges in weiten Grenzen beliebig frei wählen, wobei auch eine nachträgliche Veränderung möglich ist.

Weitere Merkmale der Erfindung sind in den Ansprüchen 1 - 10 offenbart.

Die Erfindung wird nachfolgend anhand in einer Zeichnung in vereinfachter Weise dargestellten Ausführungsbeispielen näher erläutert. Dabei zeigen

Fig. 1    einen Schnitt durch eine mit einer äußeren Kraft belastbare Vorrichtung gemäß der Erfindung,

Fig. 2    einen Schnitt durch eine hydraulische Krafteinheit in Verbindung mit einer Vorrichtung gemäß der Erfindung,

Fig. 3    einen Schnitt durch eine weitere Ausbildung einer erfindungsgemäßen Vorrichtung und

Fig. 4    einen Schnitt durch eine erfindungsgemäße Vorrichtung in offener Bauweise und mit in der Grundfläche unterschiedlich großen Scheiben.

Die in der Fig. 1 der Zeichnung dargestellte Vorrichtung 1 besteht aus einem einen Innenraum 2 aufweisenden und mit einem Deckel 3 verschlossenen Gehäuse 4, in dem eine zentrisch angeordnete Stange 5 dichtend und verschiebbar geführt ist,    die mit ihren beiden Enden 5a und 5b aus dem Gehäuse 4 herausragt. Im Gehäuse 4 nimmt die Stange 5 eine fest mit ihr verbundene Platte 6 auf, die mit verhältnismäßig großem Abstand von der Innenwandung des Gehäuses 4 endet. Zwischen der Platte 6 und dem dem Deckel 3 des Innenraumes 2 abgewandten Ende des Gehäuses 4 sind mehrere, mit einer zentrischen Bohrung 7 versehene Scheiben 8 vorgesehen, die auf der Stange 5 verschiebbar gehalten sind.

Die Scheiben 8 sind beispielsweise aus einem gewellten oder gewölbten Blech aus Federstahl mit einer Dicke von etwa 0,3 mm gefertigt und enden ebenfalls mit verhältnismäßig großem Abstand von der Innenwandung des Gehäuses 4. Die Grundfläche der Scheiben 8 kann in Anpassung an die Querschnittsform des Innenraumes 2 des Gehäuses 4 kreisförmig oder rechteckig bzw. quadratisch sein. Die Wellung oder Wölbung der Scheiben 8 stellt sicher, daß sowohl zwischen den Scheiben 8 als auch zwischen einer Endscheibe 8 und dem Gehäuse 4 bzw. der Platte 6 im unbelasteten Zustand ein mittlerer Spalt 9 von etwa 0,5 mm Höhe vorhanden ist.

Der Innenraum 2 des Gehäuses 4 ist vollständig mit einer Flüssigkeit, beispielsweise Hydrauliköl, gefüllt, die sich auch in den Spalten 9 befindet und die über eine von zwei mittels Schrauben 10 dichtend verschlossenen Öffnungen 11 eingefüllt wird.

Beim Betrieb der Vorrichtung 1 wird nun auf das freie Ende 5a der Stange 5 in Richtung des Pfeiles 12 eine mechanische Kraft eines nicht dargestellten, zu verzögernden Bauteiles ausgeübt. Dadurch verschiebt sich die Stange 5 und damit die Platte 6 in Richtung auf das geschlossene Ende des Gehäuses 2. Die in den Spalten 9 vorhandene Flüssigkeit wird bei dieser Bewegung nach außen verdrängt, wobei sich mit abnehmender Spalthöhe der Strömungswiderstand vergrößert und damit die Bewegung des Bauteiles verzögert wird. In dem Moment, wenn die Spalthöhe gegen "Null" geht, wird der Strömungswiderstand annähernd unendlich groß, so daß die Scheiben 8 dann, falls gewünscht, als fester Anschlag wirken. Es ist jedoch auch möglich, der Stange 5 nach einem vorgegebenen Verzögerungsweg einen festen, in Fig. 1 nicht dargestellten Anschlag zuzuordnen.

Sobald sich das Bauteil vom Ende 5a der Stange 5 wieder wegbewegt hat, können die Scheiben 8 durch ihre elastische Verformung wieder in ihre Ausgangslage zurückkehren, wobei die im Innenraum 2 des Gehäuses 4 befindliche Flüssigkeit in die Spalte 9 einströmt. Durch diese Entspannung der Scheiben 8 kann die Platte 6 und damit auch die Stange 5 in ihre Ausgangsstellung zurückbewegt werden. Für den Fall, daß die Scheiben 8 keine ausreichende Federkraft besitzen, kann zwischen dem Ende 5a der Kolbenstange 5 und dem Deckel 3 des Gehäuses 4, wie in Fig. 1 gezeigt, eine Feder 13 angeordnet sein.

Im Ausführungsbeispiel der Fig. 1 ist das Ende 5b der Stange 5 mit Gewinde versehen, so daß hier eine Mutter 14 aufgeschraubt werden kann. Mittels dieser Mutter 14 ist es möglich, die Scheiben 8 vorzuspannen und damit die Intensität der Verzögerung zu verändern. An die beiden Öffnungen 11 kann ein Flüssigkeitskreislauf angeschlossen werden, der ein Umwälzen der im Innenraum 2 befindlichen Flüssigkeit und damit eine Energieabfuhr bzw. Kühlung derselben ermöglicht. Zusätzlich können die Scheiben 8 beispielsweise an der Stange 5 gegen Verdrehung gesichert sein. Dies stellt sicher, daß die Scheiben 8 bzw. deren Wellungen oder Wölbungen in ihren vorgegebenen Positionen zur Aufrechterhaltung der gewählten Spalthöhe gehalten werden.

In der Fig. 2 der Zeichnung ist eine Krafteinheit 15, beispielsweise einer Schneidpresse, dargestellt, die aus einem Gehäuse 16 mit zylindrischem Innenraum 17 besteht. Der Innenraum 17 nimmt einen auf einer Kolbenstange 18 befestigten Arbeitskolben 19 verschiebbar auf, der den Innenraum in einen Primärzylinderraum 17a und einen Sekundärzylinderraum 17b teilt. Der Primärzylinderraum 17a ist über eine Öffnung 20 an einen Energiespeicher und der Sekundärzylinderraum 17 über eine Öffnung 21 an eine Entspannungseinheit angeschlossen. Beide Räume 17a, 17b sind mit Druckflüssigkeit gefüllt. Im Sekundärzylinderraum 17b sind mehrere Scheiben 22 angeordnet, die in gleicher Weise wie die Scheiben 8 der Fig. 1 ausgebildet sind. Am Ende eines Schnittvorganges, wenn das mit der Kolbenstange 18 verbundene Schnittwerkzeug 23 das Werkstück 24 durchbricht, wird durch die Scheiben 22 die Bewegung des Schnittwerkzeuges 23 intensiv verzögert, so daß das Geräusch der Schnittschläge verringert wird, da die vorher vorhandene Schneidkraft nun sofort von einer entsprechend hohen, mit der Geschwindigkeit proportional und mit der Verringerung der Spalthöhe exponential ansteigenden Dämpfungskraft abgelöst wird. Die aus dem Gehäuse 16 herausragende Kolbenstange 18 kann zusätzlich mit einem Anschlag 25 ausgerüstet sein. Die Rückstellung des Arbeitskolbens 19 erfolgt hier durch Einleiten von Druckflüssigkeit in den Sekundärzylinderraum 3b, so daß sich die Scheiben 22 frei entspannen können.

Bei dem Ausführungsbeispiel der Fig. 3 ist eine einseitig geschlossene Hülse 26 auf einem feststehenden Zapfen 27 bewegbar geführt, wobei zwischen Zapfen 27 und Hülse 26 ein Innenraum 28 gebildet ist, der mehrere gewellte oder gewölbte, mit einer Bohrung 29 versehene Scheiben 30 aus Blech aufnimmt. Zusätzlich ist der Zapfen 27 mit einem in den Innenraum 28 mündenden und an Abströmkanäle 31 angeschlossenen Kanal 32 versehen, über die bei einer Belastung der Hülse 26 in Richtung des Pfeiles 33 die im Innenraum 28 befindliche Flüssigkeit verdrängt wird. Auch hier nimmt der Strömungswiderstand in den Spalten 34 mit abnehmender Spalthöhe zu. Die nach innen über die Bohrungen 29 abströmende Flüssigkeit ergibt eine höhere Verzögerung der Bewegung als dies bei gleicher Ausbildung der Scheiben 30 mit äußerer Abströmung der Fall ist. Die Rückstellung der Hülse 26 kann durch eine äußere Kraft, die Scheiben 30 oder durch Einleiten von Flüssigkeit in den Innenraum 28 erfolgen.

In dem Ausführungsbeispiel der Fig. 4 sind die gewellten oder gewölbten Scheiben 35 aus Blech um einen Zapfen 36 in einem offenen Flüssigkeitsbehälter 37 angeordnet und weisen unterschiedlich große, stufenartig veränderte Grundflächen auf, wobei der von einer äußeren Kraft beaufschlagbare Zapfen 36 im Boden 38 des Flüssigkeitsbehälters 37 verschiebbar geführt ist. Durch diese Abstufung der Scheiben 35 ist die Charakteristik der Verzögerung verändert.

In Abänderung des Ausführungsbeispieles nach Fig. 1 ist es auch möglich, die Platte 6 mittels Gewinde auf der Stange 5 zu halten und zusätzlich an der Innenwandung des Gehäuses 2 gegen Verdrehung zu sichern. Durch Drehung der Stange 5 läßt sich nun die axiale Lage der Platte 6 auf der Stange 5 verändern. Dadurch können die Scheiben 8 weniger oder stärker vorgespannt werden, was eine Veränderung der Intensität der Verzögerung und des Verzögerungsweges mit sich bringt. Diese Veränderung kann auch während des Betriebes der Vorrichtung 1 erfolgen. Die in Fig. 1 gezeichnete Mutter 14 kann dann entfallen.

152

Ing.(grad.) Horst Knäbel, Friedenstr. 10a, 4005 Meerbusch 1

Patentansprüche

1. Vorrichtung zur hydraulischen Verzögerung der Bewegung zwischen zwei relativ gegeneinander bewegbaren Bauteilen, insbesondere zwischen einem Kolben und einem Gehäuse, wobei der Raum zwischen den beiden Bauteilen vollständig mit einer Flüssigkeit gefüllt ist, dadurch gekennzeichnet, daß zwischen den beiden Bauteilen mindestens eine dünne, von einer geringen Rückstellkraft beaufschlagbare Scheibe (8,22,30,35) zur Bildung mindestens zweier mit der Flüssigkeit gefüllter, offener Spalte (9) angeordnet ist und die beiden Bauteile unter Überwindung der Rückstellkraft der Scheibe (8,22,30,35) und Verdrängung der Flüssigkeit aus den Spalten (9) relativ gegen die Scheibe (8,22,30,35) bewegbar sind.

2. Vorrichtung nach Anspruch 1, dadurch gekennzeichnet, daß zwischen den beiden Bauteilen mindestens zwei dünne Scheiben (8,22,30,35), zwischen denen ebenfalls mindestens ein Spalt (9) gebildet ist, angeordnet und gegeneinander bewegbar sind.

3. Vorrichtung nach Anspruch 1 oder 2, dadurch gekennzeichnet, daß die Rückstellkraft der Scheiben (8,22,30,35) durch die Scheiben (8,22,30,35) selbst gebildet ist und die Scheiben (8,22,30,35) aus federelastischem Werkstoff geformt sind.

- 2 -

4. Vorrichtung nach Anspruch 3,
   dadurch gekennzeichnet,
   daß zumindest ein Teil der Scheiben (8,22,30,35)
   gewellt oder gewölbt ausgebildet ist.

5. Vorrichtung nach einem der Ansprüche 1 - 4,
   dadurch gekennzeichnet,
   daß die Wandstärke der Scheiben (8,22,30,35) etwa
   0,3 mm und die Höhe des Spaltes (9) etwa 0,5 mm beträgt.

6. Vorrichtung nach einem der Ansprüche 1 - 5,
   dadurch gekennzeichnet,
   daß die Scheiben (8,22,30,35) gleich oder unterschiedlich große Grundflächen aufweisen.

7. Vorrichtung nach einem der Ansprüche 1 - 6,
   dadurch gekennzeichnet,
   daß die Scheiben (8,22,30,35) mit einer Bohrung (7,29)
   versehen sind.

8. Vorrichtung nach einem der Ansprüche 1 - 7,
   dadurch gekennzeichnet,
   daß die Scheiben (8,22,30,35) innerhalb ihrer Grundflächen
   an ihrer inneren oder ihrer äußeren Fläche gegen Verdrehung gesichert sind.

9. Vorrichtung nach einem der Ansprüche 1 - 8,
   dadurch gekennzeichnet,
   daß die Scheiben (8) entgegen ihrer Rückstellkraft vorgespannt sind.

10. Vorrichtung nach Anspruch 1,
    dadurch gekennzeichnet,
    daß der die Scheiben (8) aufnehmende Raum (2) an einen
    Flüssigkeitskreislauf angeschlossen ist.

Fig.1

Fig.2   0099559

1/1

Fig.3

Fig.4